# EUROPÄISCHE PATENTSCHRIFT

(11) **EP 2 562 447 B1**
(45) Veröffentlichungstag und Bekanntmachung des Hinweises auf die Patenterteilung: **07.01.2015**
(21) Anmeldenummer: 12181523.7
(22) Anmeldetag: 23.08.2012
(51) Int. Cl.: F16H 63/32, F16H 59/70, F16H 63/38

(54) **Schaltgabel**
Shift fork
Fourchette de commutation

(30) Priorität: 25.08.2011 DE 102011081593
(43) Veröffentlichungstag der Anmeldung: 27.02.2013
(73) Patentinhaber: FSG Automotive Holding AG, 09376 Oelsnitz (DE)
(72) Erfinder: Tiedtke, Detlef, 21465 Reinbek (DE); Müller, Thomas, 30900 Wedemark (DE)
(74) Vertreter: Linnemann, Winfried

(56) Entgegenhaltungen:
- DE-A1-102007 016 757
- JP-A- 2007 064 415
- US-A1- 2008 178 700

## Beschreibung

Die Erfindung betrifft eine Schaltgabel für ein Schaltgetriebe eines Kraftfahrzeugs, die bei ihrer bestimmungsgemäßen Anordnung an einer Schaltstange des Schaltgetriebes zwei im Wesentlichen quer zur Längsachse der Schaltstange ausgerichtete axiale Außenseiten aufweist, wobei in den axialen Außenseiten derart Vertiefungen angeordnet sind, dass zumindest in einem Teilabschnitt der Schaltgabel die Oberflächenstruktur der einen axialen Außenseite im Wesentlichen als Negativ der Oberflächenstruktur der anderen axialen Außenseite ausgebildet ist, wobei ein einen Boden von wenigstens einer Vertiefung der einen axialen Außenseite bildender Teil der Schaltgabel einen nicht als Vertiefung ausgebildeten Abschnitt der anderen axialen Außenseite bildet.

Des Weiteren betrifft die Erfindung eine Schalteinheit für ein Schaltgetriebe eines Kraftfahrzeugs, mit einer Schaltstange und einer daran angeordneten Schaltgabel.

Ferner betrifft die Erfindung ein Schaltgetriebe für ein Kraftfahrzeug sowie ein Kraftfahrzeug.

Schaltgabeln sind in unterschiedlichsten Ausführungsformen bekannt und werden in Schaltgetrieben eingesetzt, um beispielsweise Schiebemuffen in Eingriff mit Gangrädern zu bringen.

Eine Schaltgabel der oben genannten Art ist aus dem Dokument US 2008/0178700 A1 bekannt. Hieraus geht hervor, die äußeren Konturen der Schaltgabel mit äußeren Randverdickungen auszubilden und innerhalb der von den äußeren Randverdickungen umgrenzten Fläche eine dünnere, ebene Wand vorzusehen. Die Randverdickungen ragen entweder beidseitig gleich weit axial über die ebene Wand vor oder sie ragen alle einheitlich nur einseitig axial über die ebene Wand vor.

Aufgabe der Erfindung ist es, eine neuartige Schaltgabel bereitzustellen, welche mit hoher Formsteifigkeit unter Verwendung eines möglichst geringen Materialaufwandes herstellbar ist.

Diese Aufgabe wird bei einer Schaltgabel der eingangs genannten Art erfindungsgemäß dadurch gelöst, dass die Vertiefungen topfförmig mit je einem Boden und zwei einseitig senkrecht vom Boden abragenden Seitenwänden ausgebildet sind, dass die axialen Außenseiten der Schaltgabel durch die wechselseitige Anordnung von Vertiefungen gebildet werden und dass dabei jeweils ein den Boden einer Vertiefung der einen axialen Außenseite bildender Teil einen nicht als Vertiefung ausgebildeten Abschnitt der anderen axialen Außenseite bildet.

Die erfindungsgemäße Schaltgabel zeichnet sich durch eine sehr hohe Formsteifigkeit aus, was durch die erfindungsgemäße Anordnung der Vertiefungen in den axialen Außenseiten der Schaltgabel erreicht wird, insbesondere dadurch, dass der den Boden von wenigstens einer Vertiefung der einen axialen Außenseite bildende Teil der Schaltgabel einen nicht als Vertiefung ausgebildeten Abschnitt der anderen axialen Außenseite bildet. Hierdurch ist es möglich, beide axialen Außenseiten durch einen im Querschnitt beispielsweise zickzackförmig oder zinnenförmig ausgebildeten Materialabschnitt zu bilden, der quer zu den axialen Außenseiten ausgerichtete Unterabschnitte aufweist. Eine solche Konstruktion zeichnet sich bekanntermaßen durch eine sehr hohe Formstabilität aus. Gleichzeitig lässt sich die erfindungsgemäße Schaltgabel unter sehr geringem Materialaufwand herstellen, da Abschnitte der einen axialen Außenseite gleichzeitig Abschnitte der anderen axialen Außenseite bilden und weil die erfindungsgemäße Anordnung der Vertiefungen in den axialen Außenseiten eine sehr formstabile Stützstruktur ausbildet, so dass es nicht erforderlich ist, zur Erhöhung der Formsteifigkeit der Schaltgabel größere Mengen an Material bei deren Herstellung einzusetzen. Hierdurch kann unter anderem eine Schaltgabel geschaffen werden, die ein deutlich geringeres Gewicht als herkömmliche Schaltgabeln aufweist. Mit der Erfindung wird somit eine sehr hochwertige, formstabile und kostengünstig herstellbare Schaltgabel vorgeschlagen. Unter der topfförmigen Ausgestaltung der Vertiefung soll verstanden werden, dass die Vertiefung im Querschnitt einen ebenen Boden und zwei einseitig senkrecht vom Boden abragende Seitenwände aufweist. Diese im Querschnitt rechtwinklige Ausgestaltung der Vertiefung dient der Schaffung einer besonders hohen Formsteifigkeit der Schaltgabel.

Nach einer weiteren vorteilhaften Ausgestaltung der Erfindung ist die im Wesentlichen parallel zu der jeweiligen axialen Außenseite angeordnete Kontur von wenigstens einer Vertiefung polygonal ausgebildet. Dies bedeutet, dass die Vertiefung wenigstens drei winkelig zueinander angeordnete Seitenwände aufweist. Auch diese Ausgestaltung der erfindungsgemäßen Schaltgabel dient der Schaffung einer hohen Formsteifigkeit derselben. Vorzugsweise haben alle Vertiefungen eine solche polygonale Kontur.

Es wird weiter als vorteilhaft erachtet, wenn an der Schaltgabel eine Rastkontur angeordnet ist, die mit einem in Richtung der Rastkontur mit Kraft beaufschlagten Rastglied des Schaltgetriebes zusammenwirken kann, um eine lösbare Arretierung einer von wenigstens drei bezüglich der Längsachse der Schaltstange unterschiedlichen axialen Schaltstellungen der Schaltgabel herbeizuführen. Hierdurch können beispielsweise eine Neutralstellung und zwei Schaltstellungen der Schaltgabel lösbar arretiert werden, um die Robustheit eines mit der Schaltgabel ausgerüsteten Schaltgetriebes zu erhöhen und Fehlfunktionen desselben zu verhindern.

Vorzugsweise wird die Rastkontur durch ein metallisches Element ausgebildet, das von einer einstückig an der Schaltgabel angeformten Halterung aus Kunststoff gehalten wird. Da die Rastkontur einem relativ hohen Verschleiß unterliegt, ist es von Vorteil, sie durch ein metallisches Element mit entsprechender Formgebung auszubilden. Die einstückige Ausbildung von Schaltgabel und Halterung stellt ebenso eine kostengünstig herstellbare Ausgestaltung der Schaltgabel dar, da beide Teile unter Verwendung eines Spritzwerkzeugs in einem Arbeitsgang und ohne das Erfordernis von Nachbearbeitungen hergestellt werden können.

Besonders bevorzugt ist das metallische Element unter Freibelassung zumindest der Rastkontur mit dem Material für die Halterung umspritzt. Diese Art der formschlüssigen Verbindung zwischen metallischem Element und Halterung lässt sich sehr einfach realisieren, indem das metallische Element beim Herstellen der Schaltgabel und der einstückig daran angeformten Halterung in den hierzu verwendeten Kunststoff eingespritzt wird.

Es wird weiter vorgeschlagen, dass an der Schaltgabel eine Halteeinheit zum Halten eines Magneten angeordnet ist, welcher zum Erfassen der jeweiligen bezüglich der Längsachse der Schaltstange axialen Schaltstellung der Schaltgabel mit einem Magnetsensor des Schaltgetriebes zusammenwirken kann. Hierdurch kann die erfindungsgemäße Schaltgabel auch für Schaltgetriebe verwendet werden, bei denen die jeweilige Stellung der Schaltgabel zur Überwachung und/oder Steuerung des Schaltgetriebes elektronisch erfasst wird.

Vorzugsweise weist die Halteeinheit an ihrem der Schaltgabel abgewandten Ende ein Metallstück auf, welches von einer weiteren einstückig an die Schaltgabel angeformten Halterung der Halteeinheit gehalten wird und an dem der Magnet befestigbar ist. Der aus einem formsteifen Material gebildete Magnet kann hierdurch mit einem Element mit einer ähnlichen Formsteifigkeit verbunden werden, was den Sitz des Magneten an der Halterung verbessert. Der Magnet kann beispielsweise mittels eines kappenförmig ausgebildeten, auf das Metallstück aufgesteckten Halters befestigt sein. Zur Befestigung des Magneten an dem Metallstück kann eine lösbare Rastverbindung vorgesehen sein.

Eine weitere vorteilhafte Ausgestaltung der Erfindung sieht vor, dass die Schaltgabel, abgesehen von der ggf. durch ein metallisches Element gebildeten Rastkontur und von dem ggf. vorhandenen Metallstück der Halteeinheit, vollständig aus Kunststoff gebildet ist. Diese Ausgestaltung der Schaltgabel stellt eine deutliche Gewichtsreduzierung gegenüber Schaltgabeln aus Metall oder einem Verbundkörper aus Metall und Kunststoff dar. Zudem lässt sich die so ausgebildete Schaltgabel unter Verwendung eines Spritzwerkzeugs auf sehr kostengünstige Art und Weise fertigen, da unter anderem keine aufwändigen Nachbearbeitungsschritte vonnöten sind, wie es beispielsweise von der Fertigung von Schaltgabeln aus Metall bekannt ist. Alternativ kann die Schaltgabel jedoch auch vollständig aus Metall oder durch einen Verbundkörper aus Kunststoff und Metall gebildet sein. Auch solche Ausgestaltungen der Schaltgabel können unter Verwendung einer relativ geringen Menge an Material hergestellt werden.

Mit der Erfindung wird des Weiteren eine Schalteinheit der eingangs genannten Art vorgeschlagen, welche erfindungsgemäß dadurch gekennzeichnet ist, dass die Schaltgabel gemäß einer der oben genannten Ausgestaltungen oder einer beliebigen Kombination derselben ausgebildet ist. Hiermit sind die oben genannten Vorteile der qualitativen Hochwertigkeit, der Gewichtsreduzierung und der kostengünstigen Herstellung verbunden.

Es kann vorgesehen sein, dass die Schaltgabel einstückig mit der Schaltstange ausgebildet ist. Alternativ kann die Schaltgabel entlang der Längsachse der Schaltstange bewegbar an dieser angeordnet sein.

Des Weiteren wird ein Schaltgetriebe der eingangs genannten Art vorgeschlagen, welches durch wenigstens eine Schalteinheit gemäß einer der vorgenannten Ausgestaltungen oder einer beliebigen Kombination derselben ausgestaltet ist. Auch hiermit sind die oben mit Bezug auf die erfindungsgemäße Schaltgabel und deren vorteilhaften Ausgestaltungen beschriebenen Vorteile verbunden. Das Schaltgetriebe kann auch mehrere der oben genannten Schalteinheiten aufweisen. Auch können alle Schalteinheiten des Schaltgetriebes entsprechend ausgebildet sein. Ferner wird mit der Erfindung ein Kraftfahrzeug vorgeschlagen, welches erfindungsgemäß mit einem Schaltgetriebe der vorgenannten Art ausgestattet ist.

Weitere Vorteile und Merkmale der vorliegenden Erfindung werden im Folgenden anhand des in den beiliegenden Figuren gezeigten Ausführungsbeispiels für die erfindungsgemäße Schaltgabel näher erläutert. Dabei zeigen:
- Figur 1: eine perspektivische Darstellung eines Ausführungsbeispiels für die erfindungsgemäße Schaltgabel,
- Figur 2: eine Draufsicht des in Figur 1 gezeigten Ausführungsbeispiels,
- Figur 3A: einen Querschnitt des in den Figuren 1 und 2 gezeigten Ausführungsbeispiels entlang der Schnittlinie F-F, und
- Figur 3B: einen Querschnitt des in den Figuren 1 und 2 gezeigten Ausführungsbeispiels entlang der Schnittlinie G-G.

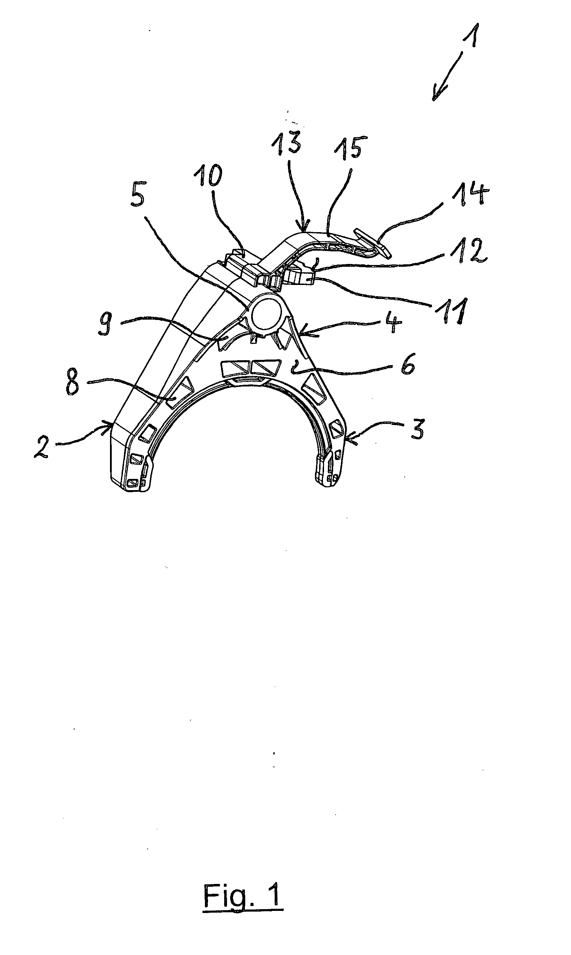

Figur 1 zeigt perspektivisch ein Ausführungsbeispiel für die erfindungsgemäße Schaltgabel 1 für ein Schaltgetriebe eines Kraftfahrzeugs. Die Schaltgabel 1 ist vollständig aus Kunststoff gebildet und umfasst zwei Gabelzinken 2 und 3, welche über einen Grundkörper 4 miteinander verbunden sind. Die Schaltgabel 1 weist zwei axiale Außenseiten 6 und 7 auf, von denen in Figur 1 nur die dem Betrachter zugewandte axiale Außenseite 6 zu sehen ist. Die axialen Außenseiten 6 und 7 sind bei bestimmungsgemäßer Anordnung der Schaltgabel 1 an einer nicht gezeigten Schaltstange des Schaltgetriebes im Wesentlichen quer- hier senkrecht - zur Längsachse der Schaltstange ausgerichtet.

An den axialen Außenseiten 6 und 7 sind Vertiefungen 8 mit unterschiedlichen Formgebungen angeordnet. Die im Wesentlichen parallel zu der jeweiligen axialen Außenseite 6 angeordneten Konturen der Vertiefungen 8 sind polygonal - hier viereckig - ausgebildet. Die Vertiefungen 8 weisen axial ausgerichtete Seitenwände auf, weshalb die axialen Außenseiten 6 und 7 im Rahmen der Erfindung nicht ausschließlich, sondern im Wesentlichen quer zu der Längsachse der Schaltstange ausgerichtet sind.

An dem Grundkörper 4 ist eine Muffe 5 angeordnet, in der die Schaltstange des Schaltgetriebes angeordnet werden kann. Die Muffe 5 ist einstückig an dem Grundkörper 4 angeformt. Zur Verstärkung der Verbindung zwischen der Muffe 5 und dem übrigen Teil der Schaltgabel 1 ist die Muffe 5 über mehrere Versteifungsstreben 9 mit dem übrigen Teil der Schaltgabel 1 verbunden.

Oberhalb der Muffe 5 ist eine Halterung 10 aus Kunststoff an die Schaltgabel 1 einstückig angeformt. Die Halterung 10 hält an ihrem der Schaltgabel 1 abgewandten Ende ein metallisches Element 11, welches eine Rastkontur 12 ausbildet, die mit einem nicht gezeigten, in Richtung der Rastkontur 12 mit Kraft beauftragten Rastglied des Schaltgetriebes zusammenwirken kann, um eine lösbare Arretierung einer von drei bezüglich der Längsachse der Schaltstange unterschiedlichen axialen Schaltstellungen der Schaltgabel 1 herbeiführen zu können. Das metallische Element 11 ist unter Freibelassung der Rastkontur 12 mit dem Material für die Halterung 10 und die Schaltgabel 1 umspritzt.

An der Oberseite der Muffe 5 ist des Weiteren eine Halteeinheit 13 zum Halten eines nicht gezeigten Magneten einstückig angeformt, welcher zum Erfassen der jeweiligen bezüglich der Längsachse der Schaltstange axialen Schaltstellung der Schaltgabel 1 mit einem nicht gezeigten Magnetsensor des Schaltgetriebes zusammenwirken kann. Die Halteeinheit 13 weist an ihrem der Schaltgabel 1 abgewandten Ende ein Metallstück 14 auf, welches von einer weiteren einstückig an der Schaltgabel 1 angeformten Halterung 15 der Halteeinheit 13 gehalten wird und an dem der Magnet befestigbar ist.

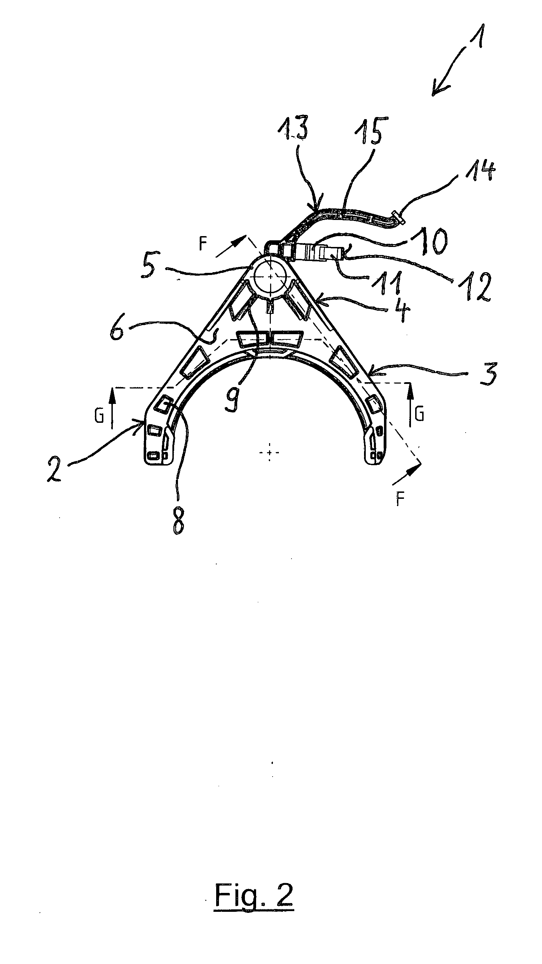

Figur 2 zeigt das in Figur 1 gezeigte Ausführungsbeispiels für die erfindungsgemäße Schaltgabel 1 in einer Draufsicht. Es sind die viereckigen Konturen der Vertiefungen 8 zu sehen.

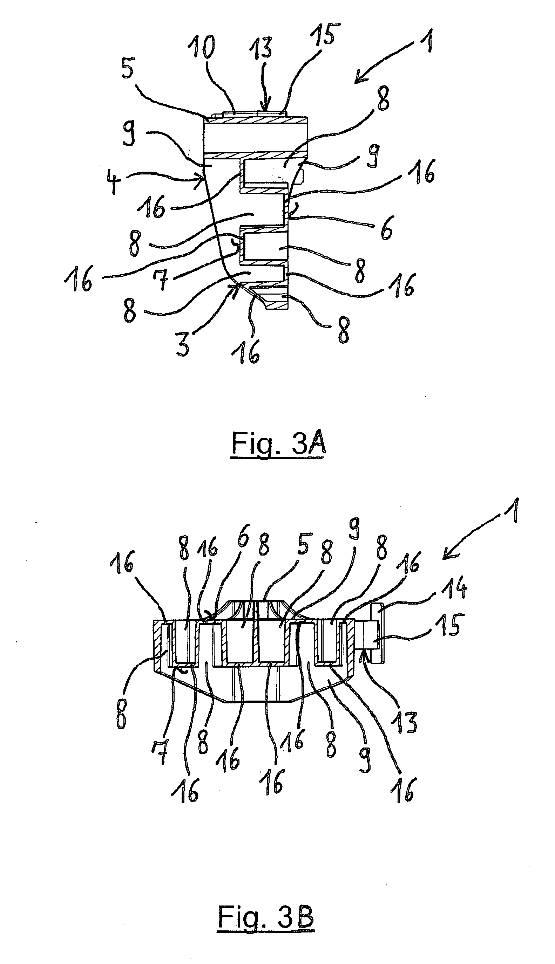

Figur 3A zeigt einen Querschnitt des in den Figuren 1 und 2 gezeigten Ausführungsbeispiels für die erfindungsgemäße Schaltgabel 1 entlang der Schnittlinie F-F gemäß Figur 2. Es ist zu erkennen, dass die Vertiefungen 8 derart an den axialen Außenseiten 6 und 7 angeordnet sind, dass zumindest in einem Teilabschnitt der Schaltgabel 1 die Oberflächenstruktur der einen axialen Außenseite 6 bzw. 7 im Wesentlichen als Negativ der Oberflächenstruktur der anderen axialen Außenseite 7 bzw. 6 ausgebildet ist. Der jeweilig den Boden der Vertiefungen 8 der einen axialen Außenseite 6 bzw. 7 bildende Teil 16 der Schaltgabel 1 bildet einen nicht als Vertiefung 8 ausgebildeten Teil der anderen axialen Außenseite 7 bzw. 6. Bis auf die untere Vertiefung 8 sind alle Vertiefungen 8 topfförmig ausgebildet.

Figur 3A zeigt, dass die Oberflächenstruktur der axialen Außenseite 6 nicht exakt und vollständig als Negativ der Oberflächenstruktur der axialen Außenseite 7 ausgebildet ist, was im Rahmen der Erfindung nicht zu fordern ist. Stattdessen gibt es Abweichungen, so dass die Oberflächenstruktur der einen axialen Außenseite 6 bzw. 7 im Wesentlichen als Negativ der Oberflächenstruktur der anderen axialen Außenseite 7 bzw. 6 ausgebildet ist.

Figur 3B zeigt einen Querschnitt des in den Figuren 1 und 2 gezeigten Ausführungsbeispiels für die erfindungsgemäße Schaltgabel 1 entlang der Schnittlinie G-G gemäß Figur 2. Auch bei diesem Querschnitt ist zu erkennen, dass die axialen Außenseiten 6 und 7 der Schaltgabel 1 durch die wechselseitige Anordnung von Vertiefungen 8 gebildet werden.

Die Figuren zeigen somit eine Schaltgabel 1, welche aufgrund der erfindungsgemäßen Ausbildung der axialen Außenseiten 6 und 7 mit einer Art Stützkonstruktion versehen ist, die es erlaubt, die Schaltgabel 1 unter geringem Materialaufwand mit dennoch sehr hoher Formsteifigkeit herzustellen. Im Rahmen der Erfindung sind unterschiedlichste Kombinationen der oben beschriebenen Ausgestaltungen der Schaltgabel möglich.

Das anhand der Figuren beschriebene Ausführungsbeispiel dient der Erläuterung und ist nicht beschränkt.

**Bezugszeichenliste:**

| Zeichen | Bezeichnung |
|---|---|
| 1 | Schaltgabel |
| 2 | Gabelzinke |
| 3 | Gabelzinke |
| 4 | Grundkörper |
| 5 | Muffe |
| 6 | axiale Außenseite |
| 7 | axiale Außenseite |
| 8 | Vertiefung |
| 9 | Versteifungsstrebe |
| 10 | Halterung |
| 11 | metallisches Element |
| 12 | Rastkontur |
| 13 | Halteeinheit |
| 14 | Metallstück |
| 15 | Halterung |
| 16 | Teil der Schaltgabel |

## Patentansprüche

1. Schaltgabel (1) für ein Schaltgetriebe eines Kraftfahrzeugs, die bei ihrer bestimmungsgemäßen Anordnung an einer Schaltstange des Schaltgetriebes zwei im Wesentlichen quer zu der Längsachse der Schaltstange ausgerichtete axiale Außenseiten (6, 7) aufweist, wobei in den axialen Außenseiten (6, 7) derart Vertiefungen (8) angeordnet sind, dass zumindest in einem Teilabschnitt der Schaltgabel (1) die Oberflächenstruktur der einen axialen Außenseite (6, 7) im Wesentlichen als Negativ der Oberflächenstruktur der anderen axialen Außenseite (6, 7) ausgebildet ist, wobei ein einen Boden von wenigstens einer Vertiefung (8) der einen axialen Außenseite (6, 7) bildender Teil (16) der Schaltgabel (1) einen nicht als Vertiefung (8) ausgebildeten Abschnitt der anderen axialen Außenseite (6, 7) bildet,
**dadurch gekennzeichnet,**
**dass** die Vertiefungen (8) topfförmig mit je einem Boden und zwei einseitig senkrecht vom Boden abragenden Seitenwänden ausgebildet sind,
**dass** die axialen Außenseiten (6, 7) der Schaltgabel (1) durch die wechselseitige Anordnung von Vertiefungen (8) gebildet werden und
**dass** dabei jeweils ein den Boden einer Vertiefung (8) der einen axialen Außenseite (6, 7) bildender Teil einen nicht als Vertiefung (8) ausgebildeten Abschnitt der anderen axialen Außenseite (7, 6) bildet.

2. Schaltgabel (1) nach Anspruch 1, **dadurch gekennzeichnet, dass** eine im Wesentlichen parallel zu der jeweiligen axialen Außenseite (6, 7) angeordnete Kontur von wenigstens einer Vertiefung (8) polygonal ausgebildet ist.

3. Schaltgabel (1) nach Anspruch 1 oder 2, **gekennzeichnet durch** eine an der Schaltgabel (1) angeordnete Rastkontur (12), die mit einem in Richtung der Rastkontur (12) mit Kraft beaufschlagten Rastglied des Schaltgetriebes zusammenwirken kann, um eine lösbare Arretierung einer von wenigstens drei bezüglich der Längsachse der Schaltstange unterschiedlichen axialen Schaltstellungen der Schaltgabel (1) herbeizuführen.

4. Schaltgabel (1) nach Anspruch 3, **dadurch gekennzeichnet, dass** die Rastkontur (12) durch ein metallisches Element (11) ausgebildet wird, das von einer einstückig an der Schaltgabel (1) angeformten Halterung (10) aus Kunststoff gehalten wird.

5. Schaltgabel (1) nach Anspruch 4, **dadurch gekennzeichnet, dass** das metallische Element (11) unter Freibelassung zumindest der Rastkontur (12) mit dem Material für die Halterung (10) umspritzt ist.

6. Schaltgabel (1) nach einem der vorhergehenden Ansprüche, **gekennzeichnet durch** eine an der Schaltgabel (1) angeordnete Halteeinheit (13) zum Halten eines Magneten, welcher zum Erfassen der jeweiligen bezüglich der Längsachse der Schaltstange axialen Schaltstellung der Schaltgabel (1) mit einem Magnetsensor des Schaltgetriebes zusammenwirken kann.

7. Schaltgabel (1) nach Anspruch 6, **dadurch gekennzeichnet, dass** die Halteeinheit (13) an ihrem der Schaltgabel (1) abgewandten Ende ein Metallstück (14) aufweist, welches von einer weiteren einstückig an die Schaltgabel (1) angeformten Halterung (15) der Halteeinheit (13) gehalten wird und an dem der Magnet befestigbar ist.

8. Schaltgabel (1) nach einem der vorhergehenden Ansprüche, **dadurch gekennzeichnet, dass** sie, abgesehen von der ggf. durch das metallische Element (11) gebildeten Rastkontur (12) und von dem ggf. vorhandenen Metallstück (14) der Halteeinheit (13), vollständig aus Kunststoff gebildet ist.

9. Schalteinheit für ein Schaltgetriebe eines Kraftfahrzeugs, mit einer Schaltstange und einer daran angeordneten Schaltgabel (1),
**dadurch gekennzeichnet,**
**dass** die Schaltgabel (1) gemäß einem der vorhergehenden Ansprüche ausgebildet ist.

10. Schalteinheit nach Anspruch 9, **dadurch gekennzeichnet, dass** die Schaltgabel (1) einstückig mit der Schaltstange ausgebildet ist.

11. Schaltgetriebe für ein Kraftfahrzeug,
**gekennzeichnet durch**
wenigstens eine Schalteinheit gemäß Anspruch 9 oder 10.

12. Kraftfahrzeug,
**gekennzeichnet durch**
ein Schaltgetriebe nach Anspruch 11.

## Claims

1. A shift fork (1) for a transmission for a motor vehicle, which, when arranged as intended on a shift rod of the transmission, encompasses two axial outer sides (6, 7), which are substantially oriented at right angles to the longitudinal axis of the shift rod, wherein depressions (8) are arranged in the axial outer sides (6, 7) such that the surface structure of the one axial outer side (6, 7) is embodied substantially as negative of the surface structure of the other axial outer side (6, 7), at least in a partial section of the shift fork (1), wherein a part (16) of the shift fork (1), which forms a bottom of at least one depression (8) of the one axial outer side (6, 7), forms a section of the other axial outer side (6, 7), which is not embodied as depression (8),
**characterized in**
**that** the depressions (8) are embodied in a cup-shaped manner, in each case comprising a bottom and two side walls, which project vertically away from the bottom on one side,
**that** the axial outer sides (6, 7) of the shift fork (1) are formed by the alternating arrangement of depressions (8) and
**that** a part, which forms the bottom of a depression (8) of the one axial outer side (6, 7), thereby in each case forms a section, which is not embodied as depression (8), of the other axial outer side (7, 6).

2. The shift fork (1) according to claim 1, **characterized in that** a contour of at least one depression (8), which is arranged substantially parallel to the respective axial outer side (6, 7), is embodied polygonally.

3. The shift fork (1) according to claim 1 or 2, **characterized by** a latching contour (12), which is arranged at the shift fork (1) and which can interact with a latching member of the transmission, to which a force is applied in the direction of the latching contour (12), so as to bring about a releasable latching of one of at least three axial shift positions of the shift fork (1), which are different with respect to the longitudinal axis of the shift rod.

4. The shift fork (1) according to claim 3, **characterized in that** the latching contour (12) is embodied by a metallic element (11), which is held by a holder (10) made of plastic, which is integrally molded to the shift fork (1) in one piece.

5. The shift fork (1) according to claim 4, **characterized in that** the metallic element (11) is insert-molded with the material for the holder (10) by leaving open at least the latching contour (12).

6. The shift fork (1) according to any one of the preceding claims, **characterized by** a holding unit (13) arranged at the shift fork (1) for holding a magnet, which can interact with a magnetic sensor of the transmission, so as to detect the respective axial shift position of the shift fork (1) relative to the longitudinal axis of the shift rod.

7. The shift fork (1) according to claim 6, **characterized in that**, at its end, which faces away from the shift fork (1), the holding unit (13) encompasses a metal piece (14), which is held by a further holder (15) of the holding unit (13), which is integrally molded to the shift fork (1) in one piece, and to which the magnet can be fastened.

8. The shift fork (1) according to any one of the preceding claims, **characterized in that**, apart from the latching contour (12), which might be formed by the metallic element (11), and apart from the metal piece (14) of the holding unit (13), which might be present, said shift fork (1) is formed completely of plastic.

9. A shift unit for a transmission for a motor vehicle, comprising a shift rod and a shift fork (1) arranged thereon,
**characterized in**
**that** the shift fork (1) is embodied according to any one of the preceding claims.

10. The shift unit according to claim 9, **characterized in that** the shift fork (1) is embodied in one piece with the shift rod.

11. A transmission for a motor vehicle,
**characterized by**
at least one shift unit according to claim 9 or 10.

12. A motor vehicle,
**characterized by**
a transmission according to claim 11.

## Revendications

1. Fourchette de boîte de vitesses (1) pour une boîte de vitesses d'un véhicule automobile qui présente lors de sa disposition conforme à sa destination sur une tringle de changement de vitesse de la boîte de vitesses deux côtés externes axiaux (6, 7) orientés essentiellement de manière transversale à l'axe longitudinal de la tringle de changement de vitesse, dans laquelle des renfoncements (8) sont disposés dans les côtés externes axiaux (6, 7) tels qu'au moins dans une section partielle de la fourchette de boîte de vitesses (1), la structure superficielle d'un des côtés externes axiaux (6, 7) est essentiellement réalisée en tant qu'opposé de la structure superficielle de l'autre côté externe axial (6, 7), dans laquelle une partie (16) de la fourchette de boîte de vitesses (1) formant un fond d'au moins un renfoncement (8) d'un des côtés externes axiaux (6, 7) forme une section de l'autre côté externe axial (6, 7) qui n'est pas réalisée en tant que renfoncement (8),
**caractérisée en ce**
**que** les renfoncements (8) sont réalisés en forme de pot avec chacun un fond et deux parois latérales saillant d'un côté perpendiculairement au fond, que les côtés externes axiaux (6, 7) de la fourchette de boîte de vitesses (1) sont formés par la disposition alternative de renfoncements (8) et qu'une partie formant le fond d'un renfoncement (8) d'un des côtés externes axiaux (6, 7) forme en l'occurrence à chaque fois une section de l'autre côté externe axial (7, 6) qui n'est pas réalisée en tant que renfoncement (8).

2. Fourchette de boîte de vitesses (1) selon la revendication 1, **caractérisée en ce qu'**un contour d'au moins un renfoncement (8) disposé essentiellement parallèlement au côté externe axial respectif (6, 7) est réalisé de manière polygonale.

3. Fourchette de boîte de vitesses (1) selon la revendication 1 ou 2, **caractérisée par** un contour d'encliquetage (12) disposé sur la fourchette de boîte de vitesses qui peut coopérer avec un élément d'encliquetage de la boîte de vitesses sollicité avec force en direction du contour d'encliquetage (12) pour entraîner un blocage amovible d'une d'au moins trois positions de changement de vitesse axiales de la fourchette de boîte de vitesses (1), différentes par rapport à l'axe longitudinal de la tringle de changement de vitesse.

4. Fourchette de boîte de vitesses (1) selon la revendication 3, **caractérisée en ce que** le contour d'encliquetage (12) est réalisé par un élément métallique (11) qui est maintenu par un dispositif de fixation (10) en plastique, moulé d'une pièce sur la fourchette de boîte de vitesses (1).

5. Fourchette de boîte de vitesses (1) selon la revendication 4, **caractérisée en ce que** l'élément métallique (11) est couvert par extrusion en laissant libre au moins le contour d'encliquetage (12) avec le matériau pour le dispositif de fixation (10).

6. Fourchette de boîte de vitesses (1) selon une des revendications précédentes, **caractérisée par** un module de maintien (13) disposé sur la fourchette de boîte de vitesses (1) pour le maintien d'un aimant qui peut coopérer avec un capteur magnétique de la boîte de vitesses pour détecter la position de changement de vitesse axiale, respective par rapport à l'axe longitudinal de la tringle de changement de vitesse, de la fourchette de boîte de vitesses (1).

7. Fourchette de boîte de vitesses (1) selon la revendication 6, **caractérisée en ce que** le module de maintien (13) présente à son extrémité détournée de la fourchette de boîte de vitesses (1) une pièce métallique (14) qui est maintenue par un autre dispositif de fixation (15) du module de maintien (13) moulé d'une pièce sur la fourchette de boîte de vitesses (1) et sur laquelle l'aimant peut être fixé.

8. Fourchette de boîte de vitesses (1) selon une des revendications précédentes, **caractérisée en ce qu'**elle est formée entièrement de plastique, mis à part l'éventuel contour d'encliquetage (12) formé par l'élément métallique (11) et la pièce métallique éventuellement présente (14) du module de maintien (13).

9. Module de changement de vitesse pour une boîte de vitesses d'un véhicule automobile, comprenant une tringle de changement de vitesse et une fourchette de boîte de vitesses disposée sur elle (1),
**caractérisé en ce**
**que** la fourchette de boîte de vitesses (1) est réalisée selon une des revendications précédentes.

10. Module de changement de vitesse selon la revendication 9, **caractérisé en ce que** la fourchette de boîte de vitesses (1) est réalisée d'une pièce avec la tringle de changement de vitesse.

11. Boîte de vitesses pour un véhicule automobile,
**caractérisée par**
au moins un module de changement de vitesse selon la revendication 9 ou 10.

12. Véhicule automobile,
**caractérisé par**
une boîte de vitesses selon la revendication 11.
